# EUROPEAN PATENT APPLICATION

(11) **EP 2 327 529 A1**
(43) Date of publication of application: **01.06.2011**
(21) Application number: 10191931.4
(22) Date of filing: 19.11.2010
(51) Int. Cl.: B29C 45/16, B29C 45/14, A47C 3/12, A47C 5/12

(54) **Method for providing a multicolored monocoque made of plastics for seats, chairs and the like, and multicolored monocoque provided with such method**

(30) Priority: 25.11.2009 IT PD20090356
(71) Applicant: Gaber S.R.L., 31030 Altivole, Frazione Caselle (TV) (IT)
(72) Inventor: Gallina, Luigino, 31030, ALTIVOLE, Frazione CASELLE TV (IT); Sandona', Stefano, 35030, SELVAZZANO DENTRO PD (IT)
(74) Representative: Modiano, Micaela Nadia

(57) **Abstract**

A method for providing a multicolored monocoque (10) made of plastics for seats (11), chairs and the like, which consists in:
- injection-molding, with a plastics of a first color, a first portion (13) of a monocoque (10), the first portion having a first part (14) that is designed to be visible when the monocoque is finished and a second part (15), which extends from the first part, for supporting at least one second monocoque portion (16) of at least one second color, on the second part (15) there being through openings (20) at the regions designed to be affected by the at least one second portion (16),
- injection-molding on the second part (15) of the first portion (13) at least one second portion (16) of the monocoque, with plastics of at least one second color, the latter being distributed so as to affect at least predefined regions of a first face (18) of the second part (15), which is directed toward the injection side (21a), and to affect predefined regions of the second opposite face (18a) through the through holes (20), forming a forward-upper surface (10a), in the configuration for use of the monocoque (10), which is substantially continuous.

## Description

The present invention relates to a method for providing a multicolored monocoque made of plastics for seats, chairs and the like.

The present invention also relates to a multicolored monocoque provided with such method.

Two main types of process are most widespread currently for the provision of multicolored monocoque seats made of plastics.

A first type of method provides for painting with a second color, and optionally successive colors, a monocoque provided by injection-molding plastics of a first color.

This first type of method is generally expensive and requires, for the painting operations, specifically dedicated areas that are compliant with safety standards within the seat production line; such areas are often difficult to manage due to the toxicity of the substances typically used to perform painting.

Moreover, paint adheres very superficially to the body made of plastics of the monocoque and often an impact or a scratch is sufficient to damage or remove the paint, particularly in the case of seats, chairs or the like that are subjected to the inclemency of the weather, such as rain, humidity and intense exposure to the sun.

A second type of method places a blank, preformed from a sheet by thermoforming, within an impression inside a mold, and overmolds on the blank plastics of a different color.

Although this method is an improvement with respect to the method of the first type, it has drawbacks.

A first drawback is the fact that with such a method simply two-color monocoques are obtained, whose front-upper surface is of a first color and whose lower-rear surface is of a second color, and continuous surfaces with more complex patterns cannot be obtained due to the continuity of the blanks thermoformed from a sheet, on which the overmolding of plastics of a different color to form complex patterns would cause surface reliefs and discontinuities which would not be acceptable for a sitting surface or a back of a monocoque.

A second drawback is due to the fact that the mass-production rates of monocoques with a method of the second type are limited by the rate of provision of the thermoformed blank, an operation which is generally slower than the provision of a similar blank by injection-molding.

Furthermore, the stretching of a thermoformed sheet is typically not constant and not uniform with respect to the curved shapes of the mold, and therefore the amount of plastics to be overmolded when the blank is closed in the mold might not be precise and the finished product might not have the exact desired and preset shape.

The aim of the present invention is to provide a method for providing a multicolored monocoque made of plastics for seats, chairs and the like that is capable of obviating the drawbacks exhibited by known types of method.

Within this aim, an object of the invention is to provide a monocoque for seats, chairs and the like that has a better and innovative visual impact with respect to similar monocoques of a known type for an equal technical performance.

An object of the invention is to provide a method that does not use toxic substances such as paints.

Another object of the invention is to provide a method that can also be applied for the provision of products having different dimensions and purposes in addition to monocoques for seats.

Another object of the invention is to provide a monocoque for seats, chairs and the like that has a greater resistance to weather than painted monocoques of the known type.

Another object of the invention is to propose a method for providing a multicolored monocoque made of plastics for seats, chairs and the like, and a multicolored monocoque provided by means of such method, which can be provided by means of per se known technologies and with relatively low costs.

This aim, as well as these and other objects which will become better apparent hereinafter, are achieved by a method for providing a multicolored monocoque made of plastics for seats, chairs and the like, which consists in:
- injection-molding, with a plastics of a first color, a first portion of a monocoque, said first portion having a first part that is designed to be visible when the monocoque is finished and a second part, which extends from said first part, for supporting at least one second monocoque portion of at least one second color, on said second part of the first portion there being through openings at the regions designed to be affected by said at least one second portion,
- injection-molding on said second part of said first portion at least one second portion of said monocoque, with plastics of at least one second color, the latter being distributed so as to affect at least predefined regions of a first face of the second part, which is directed toward the injection side, and to affect predefined regions of the second opposite face through said through holes, forming a forward-upper surface of the monocoque, in the configuration for use of the monocoque, which is substantially continuous.

Further characteristics and advantages of the invention will become better apparent from the following detailed description of two preferred but not exclusive embodiments of the method according to the invention, and of two embodiments of a monocoque according to the invention, illustrated by way of non-limiting example in the accompanying drawings, wherein:
Figure 1 is a front perspective view of a seat comprising a first monocoque provided with a method according to the invention;
Figure 2 is a rear view of the seat of Figure 1;
Figure 3 is an exemplifying schematic sectional view of a first operation of the method according to the invention;
Figures 4 and 5 are views, taken from two different viewpoints, of a detail of the first portion of monocoque obtained by means of the first operation of the method according to the invention;
Figure 6 is an exemplifying schematic sectional view of a second operation of the method according to the invention;

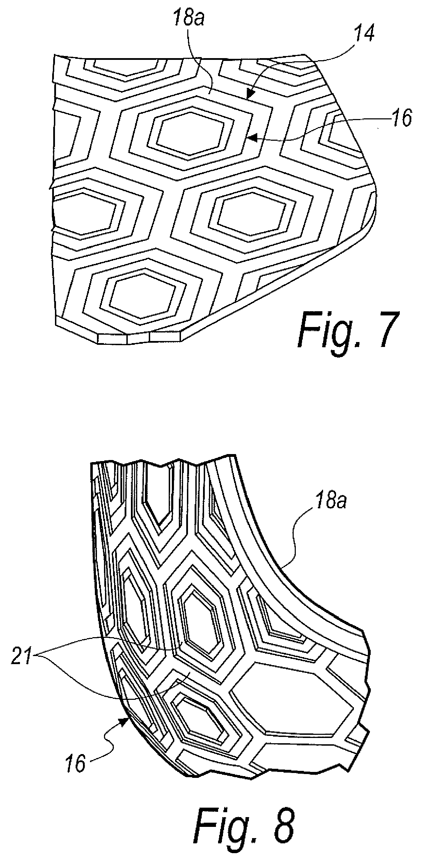

Figures 7 and 8 are views, taken from two different viewpoints, of a detail of the monocoque obtained by means of the method according to the invention in its first variation of execution;
Figure 9 is a front perspective view of a seat, which comprises a monocoque provided by means of a method according to the invention in a second variation of execution thereof;
Figure 10 is an exemplifying schematic sectional view of a first operation of the method according to the invention in its second variation of execution;
Figure 11 is a view of a detail of a first portion of a monocoque obtained by means of the method according to the invention in its second variation of execution;
Figure 12 is an exemplifying schematic sectional view of a second operation of the method according to the invention in its second variation of execution;

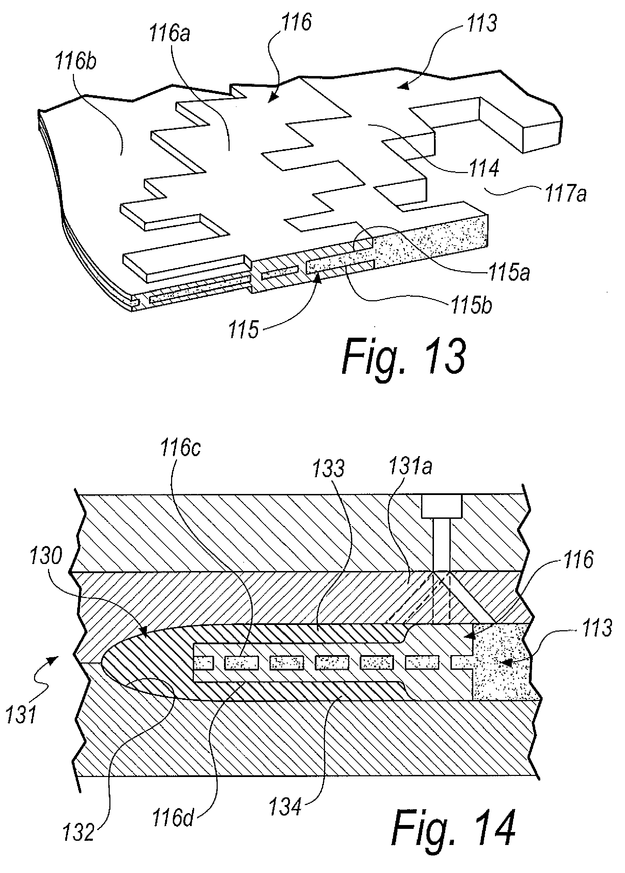

Figure 13 is a view of a detail of first and second portions of a monocoque obtained by means of the method according to the invention in its second variation of execution;
Figure 14 is an exemplifying schematic sectional view of a third operation of the method according to the invention in its second variation of execution;

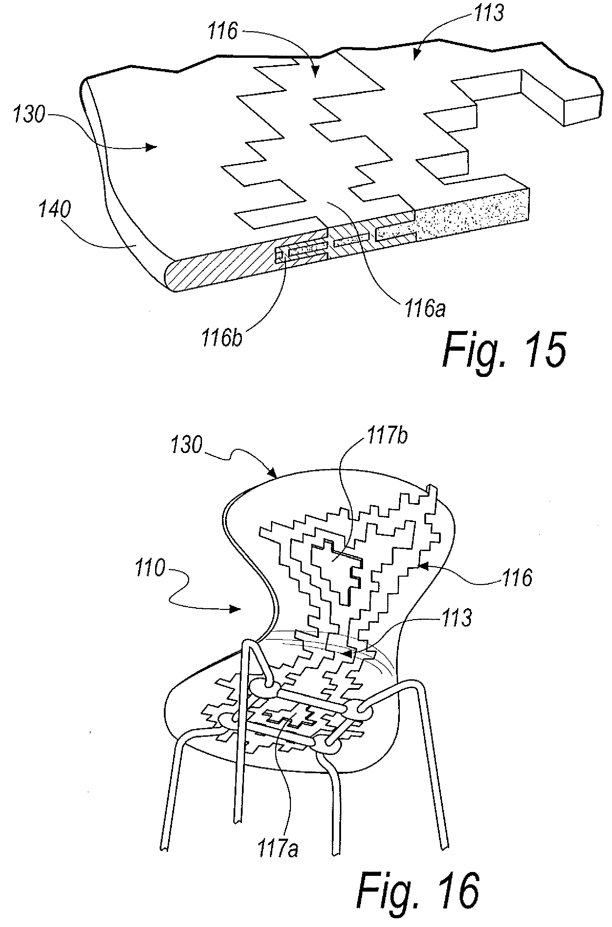

Figure 15 is a view of a detail of a finished monocoque, obtained by means of the method according to the invention in its second variation of execution;
Figure 16 is a rear perspective view of a seat with monocoque provided by means of the method according to the invention in its second variation of execution.

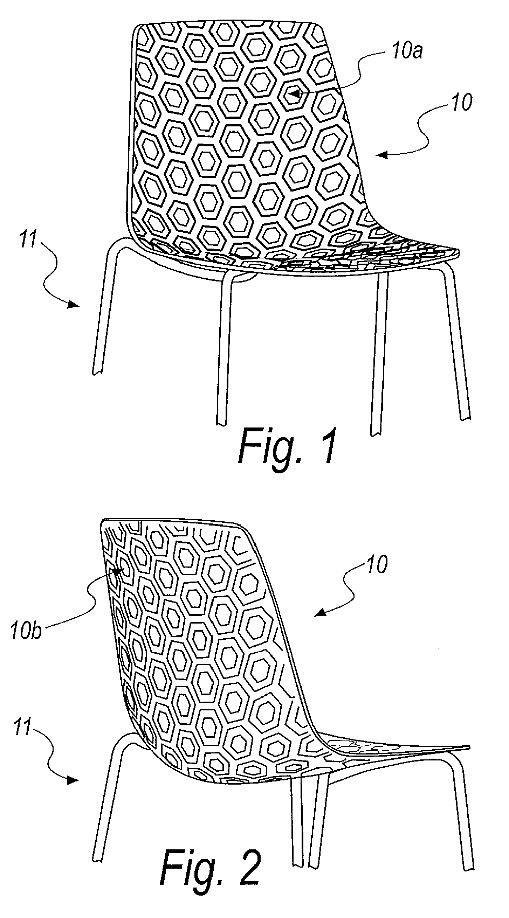

With reference to the figures, a multicolored monocoque for seats, chairs and the like is designated by the reference numeral 10 and shown in Figure 1 as part of a seat 11.

The method for providing the multicolored monocoque 10 made of plastics for seats 11, chairs and the like, in a first variation of execution, comprises the following operations.

A first operation entails injection-molding, with a plastics of a first color, within a first mold 12, a first portion 13 of the monocoque 10.

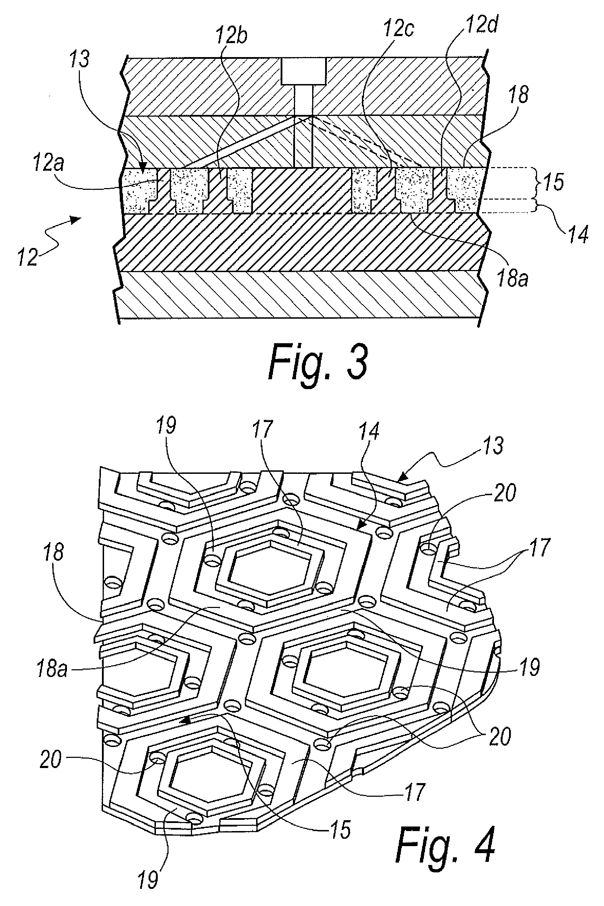

The first portion 13 has, in cross-section as shown in Figure 3, a first part 14, which is designed to be visible when the monocoque 10 is finished, and a second part 15, which extends from such first part, for supporting a second portion 16 of the monocoque 10 of a second color.

In this first example of execution thereof, the first part 14 of the monocoque 10 is provided by an array of front polygonal protrusions 17, while the second part 15 is provided by a flat body from which the polygonal protrusions 17 protrude, channels 19 being defined between the polygonal protrusions 17 and acting as seats for the deposition of a plastics of a second color.

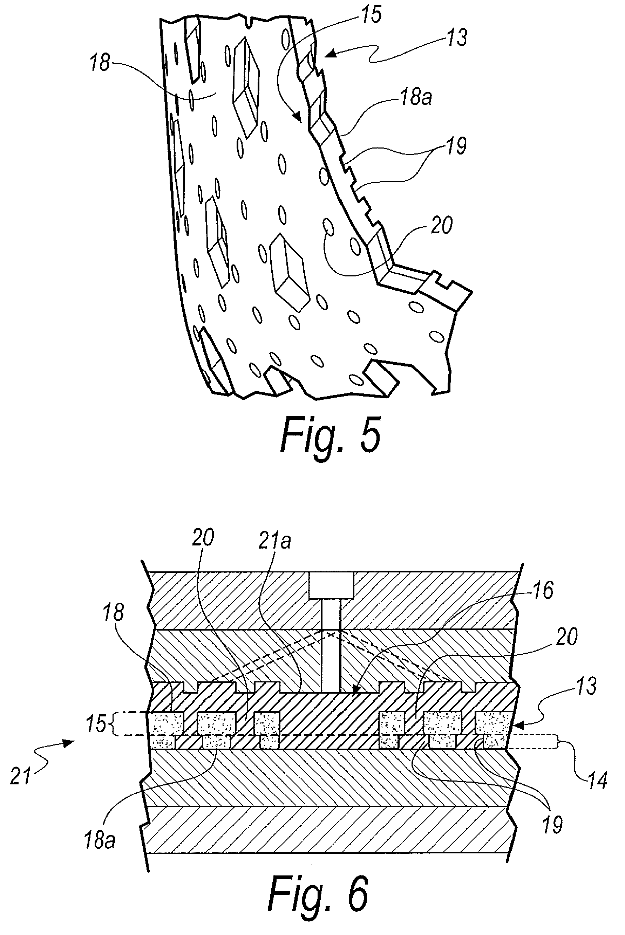

The second part 15, as clearly shown in Figures 4 and 5, is shaped with through openings 20, which are defined at the regions designed to be affected by the second portion 16, i.e., at each one of the channels 19.

The openings 20 are defined by inserts which are present in the first mold 12, of which inserts 12a, 12b, 12c and 12d are exemplified in the figure and are designed, in this embodiment, to define through holes.

The openings, i.e., in this case, the holes 20, are provided so that they are not visible when the product is finished.

A second operation of the method according to the invention provides for inserting the first portion 13 in the impression of a second mold 21 and for injection-molding on the second part 15 of the first portion 13 the second portion 16 of the monocoque 10, with plastics of a second color.

The plastics of a second color for providing the second portion 16 is distributed so as to affect at least in predefined regions a first face 18 of the second part 15, which is directed toward the injection side 21a of the second mold 21, and to affect predefined regions, i.e., the channels 19, of the second opposite face 18a through the through holes 20, defining a forward-upper surface l0a of the monocoque 10 which is substantially continuous in the configuration for use.

In particular, in this embodiment the plastics of a second color, which defines the second portion 16, is arranged so as to cover to the rear all the first face 18 of the second part 15 of the first portion 13, and is contoured to outline externally second polygonal protrusions 22, while it arranges itself in the channels 19 of the first face 18a so as to fill them and surround the polygonal protrusions 17 of the first portion 13, so as to define the continuous forward-upper surface 10a.

The plastics of the second color that defines the second portion 16 enters the openings, i.e., the holes, 20 and fills them, as in the schematic view of the molding operation of Figure 6, providing a stable connection with the first portion 13.

With a method according to the invention as described, a two-color monocoque 10 is obtained, whose front-upper surface 10a is continuous and smooth and provided with complex patterns, for example an array of concentric hexagons of two different alternating colors, which the rear and lower part is in a single color but has an array of concentric hexagons in relief.

The method for providing a multicolored monocoque 110 made of plastics for seats 111, chairs and the like comprises, in a second constructive variation thereof, in addition to the preceding operations described above, a successive third operation for molding, on part of the blank defined by the first portion 113 of a first color and by the second portion 116 of a second color, with plastics of a third color, so as to define a third portion 130 of the monocoque 110.

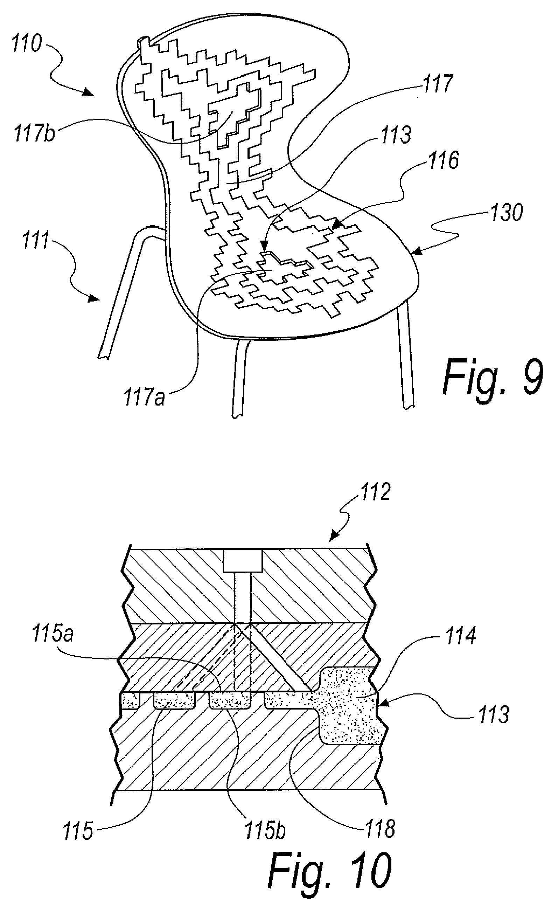

A first operation of such method in its second variation of execution entails injection-molding, with a plastics of a first color and within a first mold 112, which is exemplified and shown schematically in Figure 10, a first portion 113 of the monocoque 110.

The first portion 113 has a first part 114, which is designed to be visible when the monocoque 110 is finished, and a second part 115, which extends from such first part, for supporting a second portion 116 of the monocoque 110, of a second color.

In this second embodiment thereof, the first part 114 of the first portion 113 is constituted by a substantially figure-of-eight contour 117, which defines in the monocoque 110 two through openings, a first one 117a at the sitting portion and a second one 117b at the back.

The second part 115 is constituted by a flat body, which surrounds the first part 114, which is thinner than the thickness of the first part 114.

The step 118 between the first part 114 and the second part 115 defines the border between the first portion 113, of a first color, and the second portion 116, of a second color.

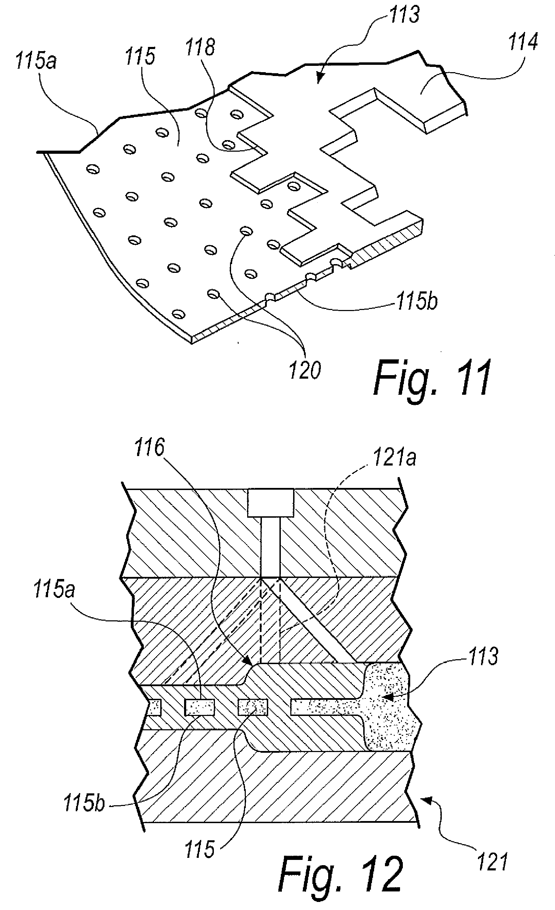

The second part 115, as clearly visible in Figure 11, is contoured so as to have through openings 120, which are defined at the regions designed to be affected by the second portion 116, in this case a single continuous region.

A second operation of the method according to the invention in its second variation of execution entails inserting the first portion 113 in the impression of a second mold 121, as exemplified and shown schematically in Figure 12.

The second portion 116 of the monocoque 110 is injection-molded in the second mold 121 onto the second part 115 of the first portion 113, with plastics of a second color.

The plastics for providing the second portion 116 of a second color is distributed so as to affect entirely the first face 115a of the second part 115 that is directed toward the injection side 121a and, through the openings, i.e., the through holes 120 of the second part 115, entirely the second face 115b of the second part 115 as well.

The openings 120 are thus embedded by the plastics of a second color, thus forming a stable connection between the first and second portions, the openings 120 not being visible when the monocoque 110 is finished.

The second portion 116, in this embodiment of the monocoque 110, covers both at the front and at the rear all of the second part 115 of the first portion 113, defining with the first part 114 of the first portion 115 a front-upper surface and a rear-lower surface which are substantially continuous and smooth.

In this embodiment, the second portion 116 also has a first part 116a, which is designed to be visible when the monocoque 110 is finished, and a second part 116b, for supporting the third portion 130 of the monocoque 110, of a third color.

The blank defined by the first portion 113 of a first color and by the second portion 116 of a second color is inserted in the impression of a third mold 131.

An interspace 132 is defined between the blank as defined and the impression of the third mold 131 in which such blank is inserted for the injection-molding of the third portion 130, for the passage of the plastics of a third color from the injection side 133 to the opposite side 134 of the impression with respect to the blank, so that it arranges itself so as to affect both a first face 116c of the second part 116b directed toward the injection side 131a and the opposite second face 116d.

It is thus obtained a monocoque 110 of three colors which are arranged substantially concentrically and are adjacent along joining lines that define complex step-like profiles, which are visible both on the front-upper surface of the monocoque 110 and on the rear-lower surface.

The invention also relates to a multicolor monocoque 10 made of plastics for seats 11, chairs and the like, which is visible in Figures 1 and 2 and comprises
- a first portion 13 of a first color, which has a first exposed part 14, and a second part 15, which extends from such first part, for supporting a second portion 16 of monocoque of a second color, the second part being contoured with through openings 20,
- a second portion 16 of a second color, which is extended so as to affect, through the through openings 20 of the second part, predefined regions, for example the channels 19, of the front face of the second part 16 of the first portion 13, defining a front-upper surface 10a of the monocoque 10 which in the configuration for use is substantially continuous.

In a second embodiment thereof, provided by means of a method according to the invention in its second variation of execution, the monocoque 110 comprises a second portion 116 of a second color, which is extended so as to affect, through the through openings 120 of the second part 115, both faces 115a and 115b of the second part 115 of the first portion 113, and a third portion 130, of a third color, which is extended so as to affect predefined second regions of at least one of such first and second portions, or both faces 116c and 116d of the second part 116b of the second portion 116.

The third portion provides the perimetric edge 140 of the monocoque 110.

In practice it has been found that the invention achieves the intended aim and objects.

In particular, a method has been devised which allows to provide a monocoque for seats, chairs and the like that has a better and innovative visual impact with respect to similar monocoques of the known type, for an equal technical performance.

Furthermore, the invention provides a method that does not use toxic substances, such as paints and the like, which can be scattered into the environment, since all the operations are performed inside molds.

Moreover, the invention provides a method that can be applied also for the provision of products having different dimensions and purposes in addition to monocoques for seats.

Furthermore, the invention provides a monocoque for seats, chairs and the like that has a greater resistance to weather, impacts and scratching than painted monocoques of the known type.

Moreover, the invention provides a method for providing a multicolored monocoque made of plastics for seats, chairs and the like, and a multicolored monocoque provided by means of such method, which can be provided by means of technologies of a per se known type and with relatively low costs.

The invention thus conceived is susceptible of numerous modifications and variations, all of which are within the scope of the appended claims; all the details may further be replaced with other technically equivalent elements.

In practice, the materials used, as well as the contingent shapes and dimensions, may be any according to requirements and to the state of the art.

The disclosures in Italian Patent Application No. PD2009A000356 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method for providing a multicolored monocoque (10) made of plastics for seats (11), chairs and the like, which consists in:
- injection-molding, with a plastics of a first color, a first portion (13) of a monocoque (10), said first portion having a first part (14) that is designed to be visible when the monocoque is finished and a second part (15), which extends from said first part, for supporting at least one second monocoque portion (16) of at least one second color, on said second part (15) there being through openings (20) at the regions designed to be affected by said at least one second portion (16),
- injection-molding on said second part (15) of said first portion (13) at least one second portion (16) of said monocoque, with plastics of at least one second color, the latter being distributed so as to affect at least predefined regions of a first face (18) of the second part (15), which is directed toward the injection side (21a), and to affect predefined regions of the second opposite face (18a) through said through holes (20), forming a forward-upper surface (10a), in the configuration for use of the monocoque (10), which is substantially continuous.

2. The method according to claim 1, **characterized in that** it comprises at least one successive operation for molding onto at least part of the blank formed by said first portion (113) of a first color and by said second portion (116) of said second color, with plastics of a third color, so as to form at least a third portion (130) of said monocoque.

3. The method according to claim 2, **characterized in that** between the blank formed by said first portion (113) of a first color and by said second portion (116) of said second color, and the impression of a third mold (131) in which said blank is inserted for the injection-molding of a third portion (130), there is an interspace (132) for the passage of said plastics of a third color from the injection side (131a) to the opposite side of the impression with respect to the blank.

4. A multicolored monocoque (10) made of plastics for chairs, seats and the like, **characterized in that** it comprises
- a first portion (13) of a first color, which has a first exposed part (14), and a second part (15), which extends from said first part (14), for supporting a second portion (16) of monocoque of a second color, said second part (15) being contoured with through openings (20),
- at least one second portion (16) of at least one second color, which is extended so as to affect, through said through openings (20) of said second part (15), predefined regions on both faces (18, 18a) of the second part (15) of said first portion (13).

5. The monocoque according to claim 4, **characterized in that** it comprises a second portion (116) of a second color, which is extended so as to affect, through said through openings (120) of said second part (115) of the first portion (113), predefined regions on both faces of the second part (115), and a third portion (130) of a third color which is extended so as to affect predefined second regions of at least one of said first portion (113) and said second portion (116).

6. The monocoque according to the claim 5, **characterized in that** said third portion (130) provides the perimetric edge (140).
